# EUROPÄISCHE PATENTANMELDUNG

(11) **EP 0 863 038 A2**
(43) Veröffentlichungstag der Anmeldung: **09.09.1998**
(21) Anmeldenummer: 98102878.0
(22) Anmeldetag: 19.02.1998
(51) Int. Cl.: B60K 15/04

(54) **Vorrichtung zum roboterfähigen Betanken eines Fahrzeuges**

(30) Priorität: 07.03.1997 DE 19709416
(71) Anmelder: Daimler-Benz Aktiengesellschaft, 70567 Stuttgart (DE)
(72) Erfinder: Kremer, Adolf, 71686 Remseck (DE); Scheurenbrand, Dieter, 72649 Wolfschlugen (DE); Steinkämper, Reinhard, 71364 Winnenden (DE)

(57) **Zusammenfassung**

Vorrichtung zum roboterfähigen Betanken eines Fahrzeuges mit einem an einem Einfüllstutzen (1) eines Kraftstofftankes des Fahrzeuges aufsetzbaren Andockteil (4) zur Aufnahme der Zapfpistole (15), sowie mit einem unterseitig an dem Andockteil (4) befestigten Ringträgerteil (8), auf dem ein mit Bajonettarmen (23) versehener Verriegelungsring (18) verdrehsicher, jedoch über eine Druckfeder (25) axial beweglich gehalten ist. Das Ringträgerteil (8) trägt einen am Verriegelungsring (18) oberseitig anliegenden, am Einfüllstutzen (1) drehfest angeordneten Kopplungsring (28). Zur Verrastung von Andockteil (4) mit Kopplungsring (28) sind oberseitig am Kopplungsring (28) und unterseitig am Andockteil (4) einander entsprechende Rastmittel (36,37) ausgebildet.

## Beschreibung

Die Erfindung betrifft eine Vorrichtung zum roboterfähigen Betanken eines Fahrzeuges gemäß dem Oberbegriff des Patentanspruches 1.

Eine gattungsgemäße Vorrichtung ist aus der DE 195 32 774 C1 bekannt. Bei der dort beschriebenen Betankungsanordnung weist das Andockteil eine mittige im wesentlichen kreisförmige Aussparung zur Aufnahme einer Zapfpistole auf, wobei das Andockteil eine umlaufende Innenverzahnung besitzt, in die eine Außenverzahnung an der Zapfpistole beim Andocken formschlüssig eingreift und die beiden Andockpartner (Andockteil - Zapfpistole) in Umfangsrichtung verriegelt. Zur Verriegelung in axialer Richtung ist an der Zapfpistole zumindest ein Verriegelungskörper angebracht, der in Andocklage in einen Ringraum unterhalb der Innenverzahnung eingreift. Das Andockteil besteht aus zwei Ringkörpern, die aufeinander angeordnet sind, wobei der untere Ringkörper am Einfüllstutzen des Kraftfahrzeugtankes befestigt und der obere Ringkörper auf dem unteren Ringkörper drehbar gelagert ist. Die Befestigung des unteren Ringkörpers begründet sich in einer Bajonettverriegelung am eingezogenen Rand des Einfüllstutzens. Hierzu ist an der Unterseite des unteren Ringkörpers ein hohlzylindrisches, mit einem zentralen Durchlaß versehenes Ringträgerteil durch eine Clipsverbindung befestigt, das einen mit radial abstehenden Bajonettarmen versehenen Verriegelungsring trägt. Zwischen einem am freien Ende des Ringträgerteils ausgebildeten Bund und den Bajonettarmen des Verriegelungsringes ist eine Druckfeder abgestützt. Der Verriegelungsring aufgrund der Beaufschlagung der Druckfeder in gewissen Grenzen verdrehsicher, jedoch axial beweglich gehalten. Zur Befestigung des Andockteils wird das Ringträgerteil in den Einfüllstutzen gesteckt, wobei die Bajonettarme des Verriegelungsringes durch entsprechende Aussparungen im eingezogenen Rand des Einfüllstutzens hindurchgeführt werden. Nach Aufsetzen des unteren Ringkörpers auf dem Einfüllstutzen wird das Andockteil in Umfangsrichtung gedreht, wonach die Bajonettarme entlang einer an der Unterseite des Randes des Einfüllstutzens in Umfangsrichtung verlaufenden, sich in Umfangsrichtung an die Aussparungen anschließenden rampenförmigen Nut bis zu einem Anschlag geführt sind. Die Bajonettarme sind dann nach Art der Bajonettverriegelung in der Nut verklemmt. Beim Andocken führt jedoch der Roboter bestimmte Drehbewegungen relativ zum Fahrzeug aus, beispielsweise seitens des Roboters um die Zapfpistole in dem Andockteil zu ver- oder entriegeln oder um den am Andockteil gehaltenen Verschlußdeckel horizontal zu verschwenken. Ebenso treten Drehbewegungen auf, wenn das Fahrzeug in Andocklage durch Einsteigen oder Aussteigen von Fahrzeuginsassen in vertikale Schwingungen versetzt wird. Diese Drehbewegungen können dazu führen, daß das Andockteil samt angedockter Zapfpistole entgegen den Verriegelungssinn der Bajonettverriegelung gedreht wird, so daß es zu einer losen Verriegelung bzw. schlimmstenfalls zu einer Entriegelung des Andockteils am Einfüllstutzen kommt. Dadurch wird die Betankung in höchst unerwünschter Weise unterbrochen. Denkbar ist zwar, zur Behebung dieses Mangels das Andockteil am Einfüllstutzen bei der Fahrzeugmontage unlösbar zu befestigen, jedoch soll zum einen das Andockteil auch bei gebrauchten Fahrzeugen nachrüstbar und zum anderen muß eine Betankung an üblichen Zapfsäulen weiterhin möglich sein, weshalb bei letzterem das Andockteil - möglichst einfach und unter zumutbarem Kraftaufwand - demontierbar bleiben muß.

Der Erfindung liegt die Aufgabe zugrunde, eine gattungsgemäße Vorrichtung dahingehend weiterzubilden, daß in einfacher Weise eine sichere Betankung ermöglicht wird.

Die Aufgabe wird erfindungsgemäß durch die Merkmale des Patentanspruches 1 gelöst.

Dank der Erfindung wird durch das Vorsehen eines Kopplungsringes zwischen der Unterseite des Andockteils und dem Verriegelungsring in einfacher Weise eine sichere Betankung erreicht, wobei der Kopplungsring zwar an sich frei drehbar ist, jedoch in Einbaulage des Andockteils am Einfüllstutzen drehfest angeordnet ist, und wobei sich anschließend durch Verdrehen des Andockteils gegenüber dem Kopplungsring dieses am Kopplungsring verrastet und damit in Umfangsrichtung gesichert ist. Aufgrund der drehfesten Anordnung des Kopplungsringes und der durch die Verrastung des Andockteils im Kopplungsring ebenfalls erreichten drehfesten Anordnung des Andockteils in Umfangsrichtung wird eine starre Verbindung des Andockteils mit dem Einfüllstutzen in Umfangsrichtung erzielt, wobei die starre Verbindung sich dahingehend bedarfsweise gelöst werden kann, daß die Verrastung des Andockteils durch manuelle, axial gerichtete Zugeinwirkung aufhebbar ist. Somit werden auf das Andockteil wirkende Drehkräfte aufgefangen ohne daß diese an den Verriegelungsring zu einer etwaigen Entriegelung des Andockteils weitergegeben werden können.

Zweckmäßige Ausgestaltungen der Erfindung können den Unteransprüchen entnommen werden; im übrigen ist die Erfindung anhand eines in den Zeichnungen dargestellten Ausführungsbeispieles nachfolgend näher erläutert; dabei zeigt:
Fig. 1 in einem seitlichen Längsschnitt die erfindungsgemäße Vorrichtung mit einer Zapfpistole in Andocklage,
Fig. 2 in einer perspektivischen Ansicht das Ringträgerteil,
Fig. 3 in einer perspektivischen Ansicht den Verriegelungsring des Andockteils,
Fig. 4 in einer perspektivischen Ansicht den Kopplungsring,
Fig. 5 in einer perspektivischen Ansicht die Unterseite des Andockteils.

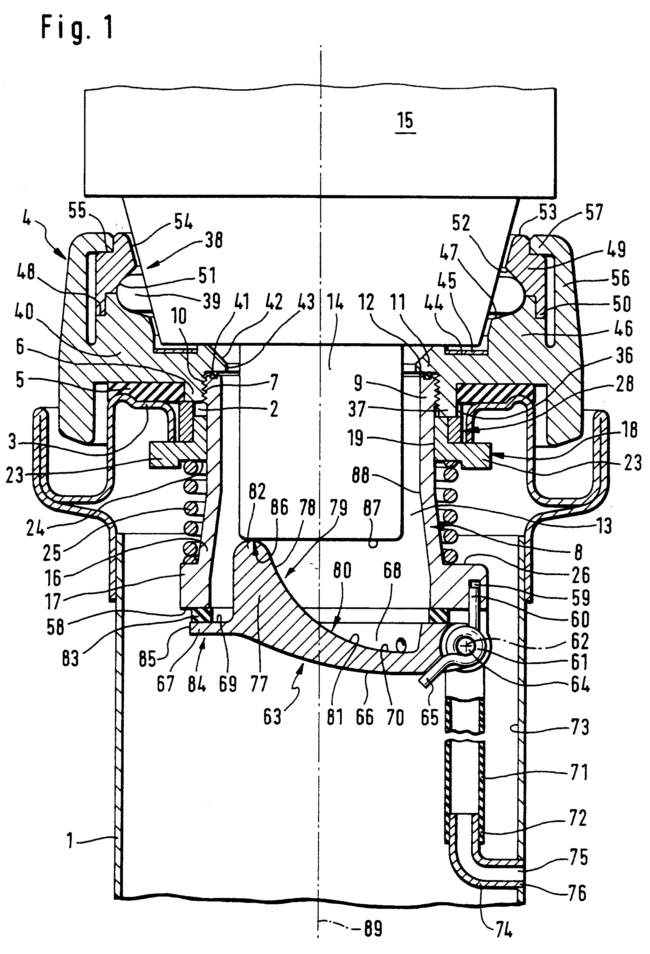

In Fig. 1 ist Einfüllstutzen 1 eines Kraftstofftankes eines Kraftfahrzeuges dargestellt, der einen eingezogenen seine Mündungsöffnung 2 begrenzenden Rand 3 besitzt. Auf dem Rand 3 des Einfüllstutzens 1 ist ein Andockteil 4 der erfindungsgemäßen Vorrichtung über eine an diesem unterseitig angebrachte Flachringdichtung 5 dichtend aufgesetzt, wobei die Flachringdichtung 5 einen am Andockteil 4 angeformten zentrischen und nach unten abstehenden Ringbund 6 umgibt.

Der Ringbund 6 weist an seiner Innenseite ein Innengewinde 7 auf, in das ein längliches hohlzylindrisches Ringträgerteil 8, das an seinem oberen Ende 9 ein entsprechendes Außengewinde 10 besitzt, hineingeschraubt ist. Das Ende 9 stützt sich oberseitig an einer nach innen vorspringenden ringförmigen Schulter 11 des Andockteils 4 dichtend ab, wobei in der Stirnseite 12 des Endes 9 ein O-Ring 41 eingelassen ist. In der gezeigten Befestigungslage der Vorrichtung am Einfüllstutzen 1 taucht das Ringträgerteil 8 durch die Mündungsöffnung 2 in den Einfüllstutzen 1 hinein. Das Ringträgerteil 8 besitzt einen zentralen Durchlaß 13 für ein Füllrohr 14 einer am Andockteil 4 angedockten Zapfpistole 15, die manuell geführt oder auch robotergeführt sein kann, zur Betankung des Kraftfahrzeugtankes. Am unteren Ende 16 des Ringträgerteils 8, das leicht konisch aufgeweitet ist, ist ein radial nach außen stehender Ringbund 17 angeformt.

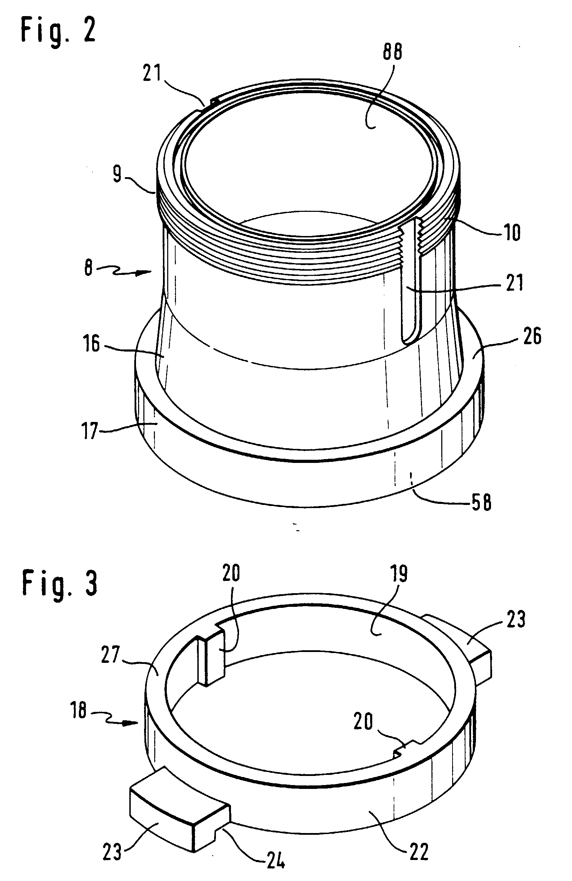

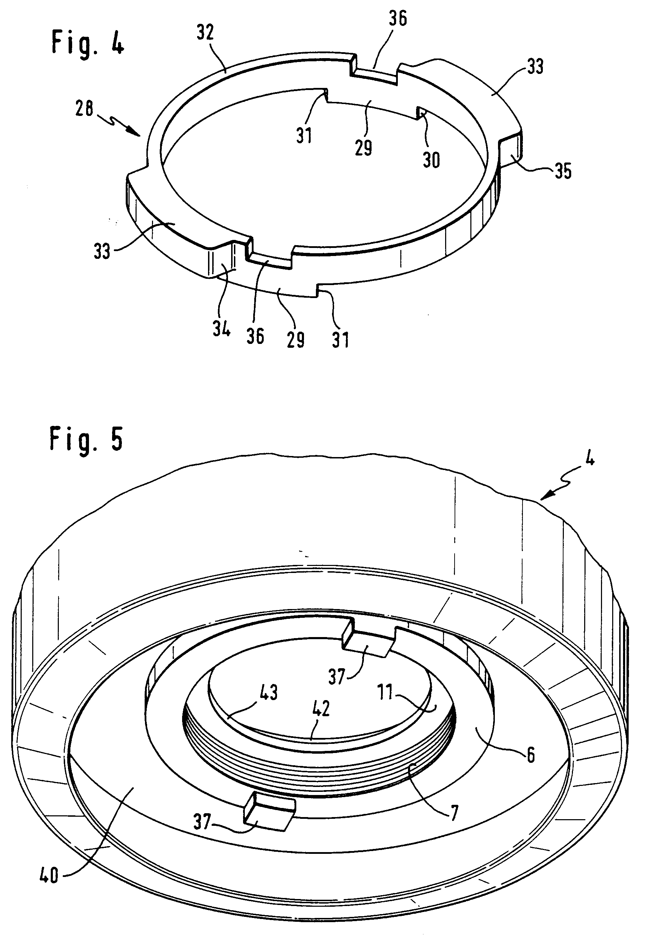

Das Ringträgerteil 8 trägt einen Verriegelungsring 18, der an seiner Innenseite 19 zwei diametral gegenüberliegende, radial einwärts stehende Haltestege 20 aufweist (Fig. 3), die in Längsnuten 21 (Fig. 2) des Ringträgerteils 8 eingreifen, wodurch der Verriegelungsring 18 am Andockteil 4 verdrehsicher gehalten ist. Die Längsnuten 21 sind nach oben hin zum Einfädeln der Haltestege 20 des Verriegelungsringes 18 beim Zusammenbau der Vorrichtung durchgängig ausgebildet. Um etwa 90° in Umfangsrichtung von den Haltestegen 20 versetzt besitzt der Verriegelungsring 18 an seiner Außenseite 22 zwei gegenüberliegende radial abstehende Bajonettarme 23, die von der Oberseite 27 des Verriegelungsringes 18 ausgehend nach unten abgestuft liegen und unterseitig ringnah jeweils eine Aussparung 24 aufweisen.

In diesen Aussparungen 24 ist einerseits eine das Ringträgerteil 8 konzentrisch umgebende Druckfeder (Schraubenfeder) 25 in radialer Richtung verschiebesicher abgestützt, die andererseits an der Oberseite 26 des Ringbundes 17 als Gegenanschlag anliegt. Der Verriegelungsring 18 ist damit federbelastet in den Längsnuten 21 axial beweglich gehalten.

Auf den Bajonettarmen 23 steht ein Kopplungsring 28 (Fig. 4) auf, der den Verriegelungsring 18 konzentrisch und - aus Gründen der Bauraumeinsparung - mit geringem Spiel umschließt. Der Kopplungsring 28 weist unterseitig zwei zum Tankinneren hin abragende einander diametral gegenüberliegende Anschlagsegmente 29 auf, deren in Umfangsrichtung weisende einander zugewandte Seiten 30,31 Anschlagkanten für die Bajonettarme 23 des Verriegelungsringes 18 bei einer relativen Drehbewegung des Verriegelungsringes 18 zu dem Kopplungsring 28 zur Verriegelung der Vorrichtung am Einfüllstutzen 1 in Andocklage bilden. Der Kopplungsring 28 besitzt in Uhrzeigersinn die Anschlagsegmente 29 überlappend von der Oberseite 32 des Kopplungsringes 28 radial abstehende Schultern 33, die die in Uhrzeigersinn weisenden Anschlagkanten 30 überdecken. Die Schultern 33 liegen sich ebenfalls diametral gegenüber und sind in Befestigungslage des Andockteils 4 am Einfüllstutzen 1 zur Verdrehsicherung des Kopplungsringes 28 innerhalb der Bajonettaussparungen des Einfüllstutzenrandes 3 angeordnet, wobei die Aussparungsenden die Anschläge für die Schulterstirnseiten 34,35 bilden.

Am Kopplungsring 28 sind an dessen Oberseite 32 Rastmittel in Form von zwei diametral gegenüberliegenden Rastnuten 36 ausgebildet, die mit am Andockteil 4 unterseitig formnegativ entsprechend gestalteten, zum Kopplungsring 28 hin abragenden Rastmittel nach Art von starren Rastzapfen 37 (Fig. 5) zur Verrastung ineinander und somit zur Verrastung des Andockteils 4 mit dem Kopplungsring 28 korrespondieren. Es können auch mehr als zwei Rastmittel jeweils an Andockteil 4 und am Kopplungsring 28 angeordnet sein, wodurch noch geringere Verdrehungen zur Erreichung einer Verrastung erforderlich sind. Die Rastzapfen 37 können auch vertikal verschiebbar, beispielsweise in einer Führungsbohrung federbelastet sein. Die Rastnuten 36 befinden sich in günstiger Weise direkt oberhalb der Anschlagsegmente 29, wodurch aufgrund der vermehrten Materialansammlung die Festigkeit des Ringes 28 am wenigsten durch die Einarbeitung der Nuten 36 beeinträchtigt wird. Die Rastzapfen 37 sind im übrigen am Ringbund 6 des Andockteils 4 angeformt.

Das Andockteil 4 besitzt eine zweiteilige Rastaufnahme 38 besitzt, in der radial bewegliche Gegenformschlußelemente 39 der Zapfpistole 15 zu deren in axialer und radialer Richtung am Andockteil 4 erfolgender Verriegelung einrastbar sind. Der unterer Teil der Rastaufnahme 38 ist von einer einfüllstutzennahen Basis 40 gebildet, die unterseitig den Ringbund 6 des Andockteils 4 mit den Rastzapfen 37 aufweist. Durch die Zweiteiligkeit der Rastaufnahme 38 kann diese aus preiswertem und leichtem Kunststoff ohne weiteres hergestellt werden. Eine einteilige Ausführung ist demgegenüber hinsichtlich der axialen Verriegelung und dem damit verbundenen erforderlichen Hinterschnitt bei Kunststoffen fertigungstechnisch sehr problematisch.

Die Basis 40 beinhaltet ebenfalls die ringförmige Schulter 11, die zur Zentrierung des Füllrohres 14 der Zapfpistole 15 beim Einführen in die Vorrichtung eine umlaufende Fase 42 an ihrer Innenseite 43 aufweist. Radial nach außen sich an die Schulter 11 anschließend ist in die Basis 40 eine ringförmige Aussparung 44 eingearbeitet, in der ein Reflektorring 45 befestigt ist, der mit einer Sensorik des Tankroboters zur korrekten Andockung der Zapfpistole 15 am Andockteil 4 korrespondiert.

Radial weiter nach außen schließt sich an die Aussparung 44 ein erhöhter als Lagerring dienender Abschnitt 46 der Basis 40 an, der an seiner Innenseite 47 formnegativ - im Ausführungsbeispiel eingewölbt - zu einem unteren Teil der Gegenformschlußelemente 39 der Zapfpistole 15 ausgebildet ist und diese in Andocklage der Zapfpistole 15 trägt. Außenseitig weist der Lagerring einen ringförmigen Absatz 48 auf, auf dem ein den oberen Teil der Rastaufnahme 38 bildender Aufsatzring 49 mit einer formnegativen nach unten abstehenden Stufe 50 gelagert und somit radial verliersicher gehalten ist.

Die Innenseite 51 des Aufsatzringes 49 ist entsprechend einem oberen Teil der Gegenformschlußelemente 39 formnegativ ausgebildet, wobei sich nach oben eine umlaufende der Basis 40 zugewandte angeschrägte Rampe 52 anschließt, die ein Herausrutschen der Gegenformschlußelemente 39 aus der Rastaufnahme 38 im Falle einer Notabdockung zuläßt. An die Rampe 52 schließt sich zur Oberseite 53 des Aufsatzringes 49 hin eine umlaufende, von der Basis 40 abgewandte Zentrierschräge 54 an, über die die Zapfpistole 15 beim Einführen in das Andockteil 4 zentriert wird. Der Aufsatzring 49 besitzt mehrere von seiner Oberseite 53 aus eingearbeitete Stufen 55, in die federnde Clipsärmchen 56 mit einem Clipshaken 57 eingreifen, die am Umfang der Basis 40 angeformt sind. Dadurch ist der Aufsatzring 49 auch axial gesichert.

An der Unterseite 58 des Ringträgerteils 8 ist eine axiale Aussparung 59 angeordnet, in welcher ein Schenkel 60 einer Schenkelfeder 61 eingeklemmt ist. Die Schenkelfeder 61 ist konzentrisch um eine die Schwenkachse 62 eines Verschlußdeckels 63 eines Kraftstofftankverschlusses beinhaltende Welle 64 gewunden und stützt sich mit ihrem anderen Schenkel 65 an der Unterseite 66 des Verschlußdeckels 63 ab. Damit sind der Verschlußdeckel 63 samt der Welle 64 innerhalb des Einfüllstutzens 1 nahe dessen oberer Mündungsöffnung 2 angeordnet am Ringträgerteil 8 betriebssicher gehalten. Hierzu ist in bauraumsparender Weise die Welle 64 unmittelbar am Rand 67 des Verschlußdeckels 63 angebracht, deren Mittenachse die Schwenkachse 62 des Verschlußdeckels 63 bildet. Die Schwenkachse 62 verläuft somit in - aufgrund des Wegfalls von Verbindungsbauteilen zwischen Schwenkachse 62 und Verschlußdeckel 63 - bauraumsparender Weise tangential zum im wesentlichen umfänglich kreisrunden Rand 67 des Verschlußdeckels 63.

Der Verschlußdeckel 63 besitzt eine Sammelmulde 68 für Kondens- und/oder Regenwasser, die zur Schwenkachse 62 randnah in der Oberseite 69 des Verschlußdeckels 63 ausgebildet ist. Vom Grund 70 der Sammelmulde 68 aus, führt ein innerhalb des Deckelrandes 67 verlaufender Drainagekanal ab, der in einem Schlauchanschlußstutzen ausmündet. Auf den Stutzen ist eine schlauchartige Drainageleitung 71 bsp. aus Silikon aufgestülpt, deren anderes Ende 72 an einem als Rohrbogen ausgebildeter und an der Innenseite 73 des Einfüllstutzens 1 angebrachter Anschlußstutzen 74 fluiddicht aufgesteckt ist. Der Einfüllstutzen 1 weist eine Austrittsöffnung 75 an der Stelle des Anbringungsendes 76 des Anschlußstutzens 74 auf, über die das gesammelte Wasser aus dem Tank austreten kann.

Im schwenkachsenabgewandten Anschluß an die Sammelmulde 68 ist am Verschlußdeckel 63 auf dessen Oberseite 69 eine nasenartige Kurvenscheibe 77 angeformt, die jedoch auch als gesondertes Bauteil ausgebildet und am Verschlußdeckel 63 in herkömmlicher Weise befestigt sein kann. Die Kurvenscheibe 77 weist eine zur Schwenkachse 62 hin gewandte Führungsfläche 78 auf, die konkav eingewölbt ist. Der Verlauf der Einwölbung 79 geht im schwenkachsennahen Endbereich 80 der Führungsfläche 78 dabei kontinuierlich in den Verlauf der anschließenden Wandung 81 der Sammelmulde 68 des Verschlußdeckels 63 über. Die Kurvenscheibe 77 weist an der schwenkachsenfernsten Stelle einen erhöhten kuppenartigen Endbereich 82 auf, der hier aufgrund der Einwölbung 79 der Führungsfläche 78 zustande kommt. Prinzipiell sind jedoch auch andere Verlaufsformen der Führungsfläche 78 denkbar, die sich von diesem erhöhten Endbereich 82 aus zur Schwenkachse 62 hin mit abnehmender Höhe der Kurvenscheibe 77 erstrecken.

Durch die Anordnung der Sammelmulde 68, ihres kontinuierlichen Übergangs zur Führungsfläche 78 und der Leitungsführung über die vom Drainagekanal und der Drainageleitung 71 gebildeten Drainage nach außen wird erreicht, daß sich zu keiner Zeit Wasser sammeln kann, welches aufgrund seines der Schließkraft des Verschlußdeckels 63 entgegenwirkenden und somit öffnungswirksamen Gewichtes und seiner Kriecheigenschaften durch den Verschlußdeckel 63 an seinem umlaufenden Rand 67 hindurch in den Tankinnenraum gelangt, so daß die Zuverlässigkeit des Verschlusses zum Abhalten vom unerwünschten Eindringen verschmutzender bzw. den Kraftstoff im Tank in irgendeiner Weise beeinträchtigender Stoffe in den Tank wesentlich gefördert wird. Des weiteren wird auch eine Benetzung einer am Rand 67 auf der Oberseite 69 des Verschlußdeckels 63 angebrachten, insbesondere angeklebten, diesen umlaufenden Elastomer-Flachdichtung 83 durch Wasser verhindert, so daß die Dichtigkeit des Verschlusses und somit ein sicherer Verschluß gewährleistet ist. Gleichfalls sorgt die beschriebene Abflußvorrichtung dafür, daß beim Öffnen des Verschlußdeckels 63 durch ein Füllrohr 14 der Zapfpistole 15 vermieden wird, daß Wasser in den Tank ungehindert eindringen kann.

In der gezeigten Schließlage des eingebauten Verschlußdeckels 63 nimmt der schwenkachsenferne Endbereich 82 der Führungsfläche 78 deren geodätisch höchste Lage ein. Er ist vom nächstgelegenen Randbereich 84 auf schwenkachsenabgewandter Seite 85 des Verschlußdeckels 63 aus zur Schwenkachse 62 hin mit Abstand versetzt gelegen. Dieser Abstand ist dabei so gewählt bzw. bemessen, daß das Füllrohr 14 beim Einführen in den Einfüllstutzen 1 zu Beginn lediglich mit einem schwenkachsenfernen Umfangsabschnitt 86 seiner Stirnseite 87 am Endbereich 82 der Führungsfläche 78 zur Anlage gelangt. Die Höhe des schwenkachsenfernen Endbereiches 82 der Führungsfläche 78 ist derart dimensioniert, daß der Schwenkradius des Endbereiches 82 bezogen auf die Schwenkachse 62 des Verschlußdeckels 63 kleiner ist als der des nebenliegenden schwenkachsenfernen Randbereiches 84 des in Schließstellung befindlichen Verschlußdeckels 63 an der Stelle der den Durchlaß 13 des Ringträgerteils 8 und damit des Einfüllstutzens 1 radial begrenzenden Innenwandung 88 des Ringträgerteils 8. Dadurch wird eine verklemmfreie Verschwenkung des Verschlußdeckels 63 und damit ein zuverlässiger sicherer Verschluß sichergestellt, wobei zudem das Füllrohr 14 in den Einfüllstutzen 1 ungehindert eingeführt werden kann.

Durch seine Anordnung ist der sowohl manuell als auch durch den Tankroboter betätigbare Verschlußdeckel 63 samt Welle 3 in einfacher Weise für herkömmliche Tankeinfüllstutzen nachrüstbar und bei Schadhaftigkeit auswechselbar ist. Durch die Befestigung am Ringträgerteil 8 ergibt sich auch eine wesentliche Vereinfachung der Plazierung des Verschlußdeckels 63 im Einfüllstutzen 1. Die Anordnung des Verschlußdeckels 63 nahe der Mündungsöffnung 2 des Einfüllstutzens 1, die daraus resultiert, ermöglicht eine bauraumsparende Reduzierung der Füllrohrlänge und eine Verminderung der Einführzeit des Füllrohres 14, so daß das Betanken weniger Zeit in Anspruch nimmt.

Gemäß Fig. 1 befindet sich der Verschlußdeckel 63 in Schließlage und liegt von der Schenkelfeder 61 in vorgespanntem Zustand entgegen der Einführbewegung des Füllrohres 14 gerichtet federbelastet über die Elastomerdichtung 83 dichtend an der Unterseite 58 des Ringträgerteils 8 an. Das Füllrohr 14 ist soweit in den Durchlaß 13 eingeführt, daß es mit seinem schwenkachsenfernen Umfangsabschnitt 86 der Stirnseite 87 am Endbereich 82 der Führungsfläche 78 der Kurvenscheibe 77 anliegt. In der beschriebenen Einbaulage des Verschlußdeckels 63 ist die Schwenkachse 62 außerhalb des lichten Durchmessers des zentralen Durchlasses 13 des Einfüllstutzens 1 im Tank angeordnet und liegt senkrecht zu der von der Mittelachse 89 des Durchlasses 13 aufgespannten Ebene.

Im folgenden soll der Zusammenbau der erfindungsgemäßen Vorrichtung und die Funktionsweise des Anbringens der Vorrichtung am Einfüllstutzen 1 geschildert werden. Zuerst wird separat für sich das Andockteil 4 zusammengebaut, indem der Aufsatzring 49 mit der Stufe 50 auf den Absatz 48 des Lagerringes 46 der Basis 40 unter Zurückbiegen der Clipsärmchen 56 aufgesetzt wird. Danach werden die Clipsärmchen 56 freigegeben, die dann mit dem Clipshaken 57 in die Stufen 55 des Aufsatzringes 49 unter Bildung einer Clipsverbindung des Aufsatzringes 49 mit der Basis 40 eingreifen.

Gleichfalls separat wird auf das Ringträgerteil 8 die Druckfeder 25 gesteckt, die an der Oberseite 26 des Ringbundes 17 aufsteht. Danach wird auf das Ringträgerteil 8 der Verriegelungsring 18 derart aufgesteckt, daß seine Haltestege 20 in die Längsnuten 21 des Ringträgerteils 8 eingreifen. Der Verriegelungsring 18 liegt dabei innerhalb der Aussparungen 24 der Bajonettarme 23 auf der Druckfeder 25 auf. Des weiteren wird nun auf das Ringträgerteil 8 der Kopplungsring 28 gesteckt, der den Verriegelungsring 18 bauraumsparend koaxial umgibt und auf dessen Bajonettarmen 23 aufsteht, wobei die Anschlagsegmente 29 des Kopplungsringes 28 - in Umfangsrichtung gesehen - sich zwischen den Bajonettarmen 23 befinden. Das Ringträgerteil 8, in dessen Stirnseite 12 ein O-Ring 41 zur gasdichten Abdichtung gegenüber dem Andockteil 4 eingelassen wird, wird dann mit seinem das Außengewinde 10 tragenden oberen Ende 9 in das Innengewinde 7 des Ringbundes 6 des Andockteils 4 eingeschraubt. Am Ringträgerteil 8 wird anschließend der mit Elastomerdichtung 83, Welle 64 und Schenkelfeder 61 versehene Verschlußdeckel 63 durch Verklemmen der Schenkelfeder 61 in der Aussparung 59 des Ringträgerteils 8 befestigt. Auf den Schlauchanschlußstutzen des Verschlußdeckels 63 wird dann die Drainageleitung 71 aufgestülpt, deren anderes Ende 72 bereits am Anschlußstutzen 74 fluiddicht aufgesteckt ist. Hierbei ist zu beachten, daß die Länge der Drainageleitung 71 so lang ist, daß sie leicht handhabbar aus dem Einfüllstutzen 1 herausragt. Somit ist der Zusammenbau der Vorrichtung abgeschlossen.

Nach dem erfolgten Zusammenbau wird die Vorrichtung am Einfüllstutzen 1 angebracht, wobei das Ringträgerteil 8 mit Verschlußdeckel 63 durch die Mündungsöffnung 2 des Einfüllstutzens 1 hindurchgeführt wird, bis das Andockteil 4 unterseitig am Rand 3 des Einfüllstutzens 1 aufliegt. Beim Hindurchführen werden die Bajonettarme 23 des Verriegelungsringes 18 durch entsprechende am Rand 3 des Einfüllstutzens 1 vorgesehene Aussparungen geschoben. Das Andockteil 4 wird dann im Uhrzeigersinn gedreht, wobei zuerst die Schultern 33 des Kopplungsringes 28 in die Bajonettaussparungen des Randes 3 des Einfüllstutzens 1 gelangen und mit ihren Stirnseiten 34,35 mit nur geringem Spiel an den Aussparungsenden anliegen. Der Kopplungsring 28 ist damit verdrehgesichert. Durch das Drehen des Andockteils 4 wird durch die Schraubverbindung das Ringträgerteil 8 mitverdreht. Dadurch, daß der Verriegelungsring 18 drehfest mit dem Ringträgerteil 8 verbunden ist, wird dieser mit der Drehbewegung des Andockteils 4 ebenfalls mitverdreht. Wird das Andockteil 4 noch weiter in die gleiche Umfangsrichtung verdreht, gelangt der aufgrund der nun drehfesten Lage des Kopplungsringes 28 sich zu diesem relativ in Umfangsrichtung bewegende Verriegelungsring 18 mit seinen Bajonettarmen 23 in Kontakt mit den Anschlagkanten bildenden entgegen den Uhrzeigersinn weisenden Seiten 31. Dadurch ist ein definierter Anschlag für den Verriegelungsring 18 gebildet, so daß eine zu starke Verklemmung der Bajonettarme 23 in den entsprechenden Nuten des Einfüllstutzens 1, die für viele Personen zu einer beabsichtigten Abnahme der Vorrichtung unlösbar wäre, vermieden wird. Der Verriegelungsring 18 befindet sich nunmehr in seiner Verriegelungsstellung. Bei einer weiteren Drehung des Andockteils 4 im Uhrzeigersinn rasten die Rastzapfen 37 des Andockteils 4 in die Rastnuten 36 des Kopplungsringes 28, so daß das Andockteil 4 drehfest gesichert und eine sichere Betankung anschließend gewährleistet ist. Es sei dabei angemerkt, daß alternativ Rastzapfen 37 auch am Kopplungsring 28 und Rastnuten 36 am Andockteil 4 angebracht sein können.

Zur Abnahme der Vorrichtung ist die Verrastung der Rastzapfen 37 in den Rastnuten 36 zuerst zu lösen. Dies erfolgt manuell durch einen axialen Zug entgegen der Federkraft der Druckfeder 25, die bei der Bajonettverbindung des Verriegelungsringes 18 mit dem Rand 3 des Einfüllstutzens 1 axial zusammengedrückt wird. Nach dem Lösen der Rastverbindung wird das Andockteil 4 entgegen den Uhrzeigersinn verdreht, wobei sich die Bajonettarme 23 des Verriegelungsringes 18 aus der Verklemmung lösen und so weit verschwenkt werden, bis sie an den in Uhrzeigerrichtung weisenden Anschlagkanten 30 der Anschlagsegmente 29 anliegen. Günstigerweise ist diese Anschlagslage so gewählt, daß die Bajonettarme 23 unterhalb der Schultern 33 des Kopplungsringes 28 gelegen sind. Dadurch kann ohne weiteres Verdrehen des Andockteils 4 die Schultern 33 des Kopplungsringes 28 und die Bajonettarme 23 durch bzw. aus die/den Aussparungen des Einfüllstutzenrandes 3 hindurchgeführt bzw. herausgehoben werden, wodurch in einfacher Weise die Betankungsvorrichtung vom Einfüllstutzen 1 abgenommen werden kann. Zum manuellen Ziehen für die Entrastung und für die Verdrehvorgänge kann im übrigen zwecks besserer Handhabbarkeit oberseitig am Andockteil 4 ein Griffbügel angeordnet sein.

## Patentansprüche

1. Vorrichtung zum roboterfähigen Betanken eines Fahrzeuges mit Kraftstoff, mit einem an einem Einfüllstutzen eines Kraftstofftankes des Fahrzeuges aufsetzbaren Andockteil zur Aufnahme der Zapfpistole, in dem die Zapfpistole in axialer und umfänglicher Richtung verriegelbar ist und das eine zentrale Durchlaßöffnung für ein Füllrohr der Zapfpistole aufweist, und mit einem unterseitig an dem Andockteil befestigten, hohlzylindrischen und mit einem zentralen Durchlaß versehenen Ringträgerteil, auf dem ein mit radial abstehenden Bajonettarmen versehener Verriegelungsring verdrehsicher, jedoch axial beweglich gehalten ist, an dessen Unterseite einerseits und an einem Bund des Ringträgerteils andererseits sich eine Druckfeder abstützt, wobei die Vorrichtung mittels der Bajonettarme des Verriegelungsringes eintrittseitig am mit Aussparungen zum Durchführen der Bajonettarme versehenen Rand des Einfüllstutzens nach Art eines Bajonettverschlusses anbringbar ist,
**dadurch gekennzeichnet,**
daß das Ringträgerteil (8) einen am Verriegelungsring (18) oberseitig anliegenden, am Einfüllstutzen (1) drehfest anordenbaren Kopplungsring (28) trägt, und daß am Kopplungsring (28) oberseitig und am Andockteil (4) unterseitig einander formnegativ entsprechende Rastmittel (36,37) ausgebildet sind, mit denen das Andockteil (4) mit dem Kopplungsring verrastbar ist.

2. Vorrichtung nach Anspruch 1,
**dadurch gekennzeichnet,**
daß der Kopplungsring (28) radial abstehende Schultern (33) besitzt, die in Einbaulage des Andockteils (4) am Einfüllstutzen (1) innerhalb der Bajonettaussparungen des Einfüllstutzenrandes (3) angeordnet sind.

3. Vorrichtung nach Anspruch 1,
**dadurch gekennzeichnet,**
daß die Rastmittel aus zumindest einem am Andockteil (4) starr angebrachten Rastzapfen (37) und einer entsprechenden in den Kopplungsring (28) eingearbeiteten Rastnut (36) bestehen.

4. Vorrichtung nach Anspruch 1,
**dadurch gekennzeichnet,**
daß der Kopplungsring (28) unterseitig zwei zum Tankinneren hin abragende Anschlagsegmente (29) aufweist, die einander diametral gegenüberliegen und deren in Umfangsrichtung weisenden einander zugewandten Seiten (30,31) Anschlagkanten für die Bajonettarme (23) des Verriegelungsringes (18) bilden.

5. Vorrichtung nach Anspruch 4,
**dadurch gekennzeichnet,**
daß die Anschlagsegmente (29) sich unterhalb einer das Rastmittel des Kopplungsringes (28) bildenden Rastnut (36) befinden.

6. Vorrichtung nach Anspruch 1,
**dadurch gekennzeichnet,**
daß der Verriegelungsring (18) an der Innenseite (19) radial einwärts stehende Haltestege (20) aufweist, die in Längsnuten (21) des Ringträgerteils (8) eingreifen.

7. Vorrichtung nach Anspruch 1,
**dadurch gekennzeichnet,**
daß der Kopplungsring (28) koaxial den Verriegelungsring (18) umgibt, wobei er auf dessen Bajonettarmen (23) aufliegt.

8. Vorrichtung nach Anspruch 3,
**dadurch gekennzeichnet,**
daß der Kopplungsring (28) zwei diametral gegenüberliegende Rastnuten (36) aufweist, in die am Andockteil (4) entsprechend angeordnete Rastzapfen (37) eingreifbar sind.

9. Vorrichtung nach Anspruch 1,
**dadurch gekennzeichnet,**
daß das Ringträgerteil (8) an seinem dem Andockteil (4) zugewandten Ende (9) ein Außengewinde (10) trägt, mit dem es in ein entsprechendes am Andockteil (4) ausgebildeten Innengewinde (7) gasdicht eingeschraubt ist.

10. Vorrichtung nach Anspruch 1,
**dadurch gekennzeichnet,**
daß das Andockteil (4) eine zweiteilige Rastaufnahme (38) besitzt, in der Gegenformschlußelemente (39) der Zapfpistole (15) zu deren in axialer und radialer Richtung am Andockteil (15) erfolgender Verriegelung einrastbar sind, wobei ein unterer Teil der Rastaufnahme (38) von einer einfüllstutzennahen Basis (40) gebildet ist, auf der ein den oberen Teil der Rastaufnahme (38) bildender Aufsatzring (49) radial und axial verliersicher gelagert ist.

11. Vorrichtung nach Anspruch 10,
**dadurch gekennzeichnet,**
daß der Aufsatzring (49) innenseitig eine der Basis (40) zugewandte angeschrägte Rampe (52) aufweist.

12. Vorrichtung nach Anspruch 10,
**dadurch gekennzeichnet,**
daß am Umfang der Basis (40) Clipsärmchen (56) angeformt sind, mit denen der Aufsatzring (49) an der Basis (40) an seiner Oberseite (53) axial gehalten ist.
